# EUROPÄISCHE PATENTSCHRIFT

(11) **EP 3 486 217 B1**
(45) Veröffentlichungstag und Bekanntmachung des Hinweises auf die Patenterteilung: **15.01.2020**
(21) Anmeldenummer: 17202595.9
(22) Anmeldetag: 20.11.2017
(51) Int. Cl.: C01G 33/00, C01G 51/00, C01G 53/00, C08K 3/00, C09D 7/61, C08K 3/013

(54) **GRÜNES PIGMENT**
GREEN PIGMENT
PIGMENT VERT

(43) Veröffentlichungstag der Anmeldung: 22.05.2019
(73) Patentinhaber: Helvetia Pigmente AG, 6203 Sempach Station (CH)
(72) Erfinder: BROLL, Sascha, 6203 Sempach Station (CH)
(74) Vertreter: Dr. Meyer-Dulheuer & Partners LLP

(56) Entgegenhaltungen:
- US-A- 4 202 702
- US-B1- 9 187 617

## Beschreibung

Die vorliegende Erfindung betrifft ein anorganisches grünes Pigment sowie ein Verfahren zu dessen Herstellung.

Pigmente können in verschiedenen Anwendungen wie Farben, Lacken, Kunststoffen, Gläsern und Keramiken eingesetzt werden. Anorganische Pigmente haben dabei den Vorteil, dass sie beständig gegen Einflüsse wie Licht, Hitze oder auch Säuren und Laugen sind.

Durch selektive Absorption und Reflektion bestimmter Wellenlängen des sichtbaren Lichts erscheinen Pigmente in ihren Farben. Trifft weißes Licht auf ein gefärbtes Pigment, so werden manche Wellenlängen absorbiert, weil sie mit der Struktur des Pigments wechselwirken. Die nicht absorbierten Wellenlängen werden zum Betrachter zurück reflektiert, wodurch das Auftreten der Farbe erzeugt wird.

Nach dem Stand der Technik sind eine Vielzahl an Pigmenten bekannt. Oftmals ist die Handhabung dieser jedoch mit gesundheitlichen Risiken für den Anwender verbunden.

Ein anorganisches grünes Pigment, welches zudem nickelfrei ist, ist beispielsweise aus der US 9,187,617 B1 bekannt.

Die Aufgabe der vorliegenden Erfindung war es, ein verbessertes anorganisches grünes Pigment zur Verfügung zu stellen, welches einen guten Farbton aufweist und zudem gesundheitlich unbedenklich ist.

Gelöst wird die Aufgabe durch das erfindungsgemäße Pigment nach Anspruch 1.

Bereit gestellt wird ein grünes Pigment, umfassend ein Material mit Spinellstruktur der allgemeinen Formel:

(A₁₋ₓB₁₊ₓ)(C_{3-x-y}D₂ₓB_{1-x-2y}N_{i3y})O₈,

für 0,05 ≤ x ≤ 0,9 und 0,05 ≤ y ≤ 0,5, wobei x+2y ≤ 1 ist,
oder

(A₁₋ₓB₁₊ₓ)(C₃₋ₓD_{2x-y}B_{1-x-y}N_{i2y})O₈,

für 0,05 ≤ x ≤ 0,5 und 0,05 ≤ y ≤ 0,5
oder

(A₁₋ₓB₁₊ₓ)(C_{3-x-4y}D₂ₓB_{1-x+y}Nb_{3y})O₈,

für 0,05 ≤ x ≤ 0,5 und 0,05 ≤ y ≤ 0,2
oder

(A₁₋ₓB₁₊ₓ)(C₃₋ₓD_{2x-2y}B_{1-x+y}Nb_{y})O₈,

für 0,05 ≤ x ≤ 0,9 und 0,05 ≤ y ≤ 0,2, wobei x ≥ y ist,
oder

(A₁₋ₓB₁₊ₓ)(C_{3-x-3y}D₂ₓB₁₋ₓNb_{2y}Ni_{y})O₈,

für 0,05 ≤ x ≤ 0,9 und 0,05 ≤ y ≤ 0,2,
wobei A mindestens ein Element aus der Gruppe Co, Zn, Ca, Mg, Cu ist; und
wobei B mindestens ein Element aus der Gruppe Li, Na ist; und
wobei C mindestens ein Element aus der Gruppe Ti, Mn, Sn, Ge ist; und
wobei D mindestens ein Element aus der Gruppe Cr, B, Fe, Mn, Al ist.

Es wird somit ein grünes Pigment zur Verfügung gestellt, welches Nickel und/oder Niob enthält. Das erfindungsgemäße Pigment kann in Farben und Beschichtungen angewendet werden, sowie zur Färbung in diversen Kunststoffen, Gummi, Keramiken und Glas.

In einer bevorzugten Ausführungsform handelt es sich bei dem nickelhaltigen Mischoxid um (Co₁₋ₓLi₁₊ₓ)(Ti_{3-x-y}Cr₂ₓLi_{1-x-2y}Ni_{3y})O₈ oder (Co₁₋ₓLi₁₊ₓ)(Ti₃₋ₓCr_{2x-y}Li_{1-x-y}Ni_{2y})O₈,
bei dem niobhaltigen Mischoxid um (Co₁₋ₓLi₁₊ₓ)(Ti_{3-x-4y}Cr₂ₓLi_{1-x+y}Nb_{3y})O₈ oder (Co₁₋ₓLi₁₊ₓ)(Ti₃₋ₓCr_{2x-2y}Li_{1-x+y}Nb_{y})O₈
und bei dem nickel- und niobhaltigen Mischoxid um (Co₁₋ₓLi₁₊ₓ)(Ti_{3-x-3y}Cr₂ₓLi₁₋ₓNb_{2y}Ni_{y})O₈.

Ist in dem Pigment Nickel vorhanden, so ist es dennoch gesundheitlich unbedenklich, da es eine geringe Nickellässigkeit gemäß DIN EN 71.3:2013-05 aufweist. Auch weist es eine geringe Kobaltlässigkeit auf.
Insbesondere weist das grüne Pigment eine Nickellässigkeit von weniger als 80mg/kg und eine Kobaltlässigkeit von weniger als 30mg/kg auf.

Es ist vorteilhaft, wenn das erfindungsgemäße Pigment bei einer Verdünnung von 10 % Pigment in Plastisol einen L* Wert von 15 bis 85, einen a* Wert von -1 bis -70 und einen b* Wert von 1 bis 40 aufweist.

Insbesondere ist es vorteilhaft, wenn das erfindungsgemäße Pigment bei einer Verdünnung von 10 % Pigment in Plastisol einen L* Wert von 45 bis 55, einen a* Wert von -26 bis -40 und einen b* Wert von 11 bis 17 aufweist.

Zudem ist es bevorzugt, dass das erfindungsgemäße Pigment bei einer Verdünnung von 2 % Pigment und 10 % Titanoxid in Plastisol einen L* Wert von 40 bis 120, einen a* Wert von -1 bis -60 und einen b* Wert von 1 bis 40 aufweist.

Insbesondere ist es bevorzugt, dass das erfindungsgemäße Pigment bei einer Verdünnung von 2 % Pigment und 10 % Titanoxid in Plastisol einen L* Wert von 75 bis 92, einen a* Wert von -15 bis -23 und einen b* Wert von 5 bis 11 aufweist.

Weiterhin wird die Aufgabe gelöst durch ein Verfahren zur Herstellung eines grünen Pigments, umfassend die Schritte:
i) Mischen (nass oder trocken) der Carbonate, Nitrate, Oxalate, Phosphate, Hydroxide, Fluoride, Borate oder entsprechender Metallorganischer Verbindungen der Metalle Co, Zn, Ca, Mg, Cu, Li, Na, Ti, Mn, Sn, Ge, Cr, B, Fe , Mn, Al, und Ni oder Nb oder Ni und Nb im Mischer,
ii.) Glühen dieser Mischung bei einer Temperatur von 900°C bis 1400°C für 1h bis 3h.

Das Mischen kann nass oder trocken erfolgen.
Vorteilhafterweise erfolgt das Glühen der Mischung bei einer Temperatur von 900°C bis 1200°C.

Es ist weiterhin bevorzugt, dass anschließend das Produkt in einer Kugelmühle aufgemahlen wird.

Weitere Vorteile ergeben sich aus einer Farbzusammensetzung, einem Kunststoff oder einer Beschichtung enthaltend das grüne Pigment.

Das erfindungsgemäße Verfahren wird anhand von Ausführungsbeispielen näher erläutert.

### Beispiel 1 (Li_{1,5}Co_{0,5})(Ti_{2,4}Li_{0,525}CrNb_{0,075})O₈

Die Zusammensetzung (Li_{1,5}Co_{0,5})(Ti_{2,4}Li_{0,525}CrNb_{0,075})O₈ wurde hergestellt durch Trocken-Mischung der Metall Oxide und/oder Carbonate aus Tabelle1. Anschließend wurde die Mischung bei einer Temperatur von 960°C für 2h geglüht, und das Produkt in einer Kugelmühle aufgemahlen.

**Tabelle 1**

| | kg |
|---|---|
| Lithium Carbonat | 19,02 |
| Kobalt Oxid | 9,53 |
| Titan Oxid | 48,74 |
| Chrom Oxid | 19,33 |
| Niob Oxid | 3,38 |
| Nickel Oxid | / |
| | 100 |

Das Pigment (Li_{1,5}Co_{0,5})(Ti_{2,4}Li_{0,525}CrNb_{0,075})O₈ besitzt die folgenden farblichen Eigenschaften:

**Vollton (10 % Pigment in Plastisol) (CIELab D65 10°):**

| | |
|---|---|
| L* | 47,4 |
| a* | -31,3 |
| b* | 15,4 |

**Verdünnung (2 % Pigment und 10 % Titanoxid in Plastisol) (CIELab D65 10°):**

| | |
|---|---|
| L* | 88,1 |
| a* | -17,5 |
| b* | 6,9 |

### Beispiel 2 (Li_{1⅓}Co_{2/3})(Ti_{2⅓}Cr_{2/3}Ni)O₈

Die Zusammensetzung (Li_{1⅓}Co_{2/3})(Ti_{2⅓}Cr_{2/3}Ni)O₈ wurde hergestellt durch Trocken-Mischung der Metall-Oxide und/oder Carbonate aus Tabelle 2. Anschließend wurde die Mischung bei einer Temperatur von 960 °C für 2h geglüht und das Produkt in einer Kugelmühle aufgemahlen.

**Tabelle 2**

| | kg |
|---|---|
| Lithium Carbonat | 11,83 |
| Kobalt Oxid | 13,02 |
| Titan Oxid | 44,78 |
| Chrom Oxid | 12,18 |
| Niob Oxid | / |
| Nickel Oxid | 18,19 |
| | 100 |

Das Pigment (Li_{1⅓}Co_{2/3})(Ti_{2⅓}Cr_{2/3}Ni)O₈ besitzt die folgenden farblichen Eigenschaften:

**Vollton (10% Pigment in Plastisol) (CIELab D65 10°):**

| | |
|---|---|
| L* | 50,4 |
| a* | -36,4 |
| b* | 16,2 |

**Verdünnung (2 % Pigment und 10 % Titanoxid in Plastisol) (CIELab D65 10°):**

| | |
|---|---|
| L* | 79,7 |
| a* | -21,3 |
| b* | 9,3 |

Zudem wurde die Nickellässigkeit und Kobaltlässigkeit des Pigments bestimmt, indem die Löslichkeit über einen Zeitraum von 2h in 1n HCl gemessen wurde. Dabei konnte eine Nickellässigkeit von 71mg/kg und eine Kobaltlässigkeit von 28mg/kg ermittelt werden.

### Beispiel 3 (Li_{1,5}Co_{0,5})(Ti_{2,26}Li_{0,525}CrNb_{0,16}Ni_{0,08})O₈

Die Zusammensetzung (Li_{1,5}Co_{0,5})(Ti_{2,26}Li_{0,525}CrNb_{0,16}Ni_{0,08})O₈ wurde hergestellt durch eine trockene Mischung der Metall-Oxide und/oder Carbonate aus Tabelle 3. Anschließend wurde die Mischung bei einer Temperatur von 1100 °C für 2h geglüht und das Produkt in einer Kugelmühle aufgemahlen.

**Tabelle 3**

| | kg |
|---|---|
| Lithium Carbonat | 18,72 |
| Kobalt Oxid | 9,49 |
| Titan Oxid | 45,56 |
| Chrom Oxid | 19,25 |
| Niob Oxid | 5,43 |
| Nickel Oxid | 1,55 |
| | 100 |

Das Pigment (Li_{1,5}Co_{0,5})(Ti_{2,26}Li_{0,525}CrNb_{0,16}Ni_{0,08})O₈ besitzt die folgenden farblichen Eigenschaften:

**Vollton (10 % Pigment in Plastisol) (CIELab D65 10°):**

| | |
|---|---|
| L* | 49,5 |
| a* | -29,9 |
| b* | 12,1 |

**Verdünnung (2 % Pigment und 10 % Titanoxid in Plastisol) (CIELab D65 10°):**

| | |
|---|---|
| L* | 80,6 |
| a* | -17,6 |
| b* | 7,1 |

Die vorliegende Erfindung wird anhand folgender Figuren näher erläutert.
Abb. 1 zeigt das Röntgendiffraktogramm der Verbindung aus Beispiel 1.
Abb. 2 zeigt das Röntgendiffraktogramm der Verbindung aus Beispiel 2.
Abb. 3 zeigt das Röntgendiffraktogramm der Verbindung aus Beispiel 3.
Abb. 4 zeigt das Röntgendiffraktogramm der Verbindung Li_{1,5}Co_{0,5}(Ti_{2,5}Li_{0,5}Cr)O₈.

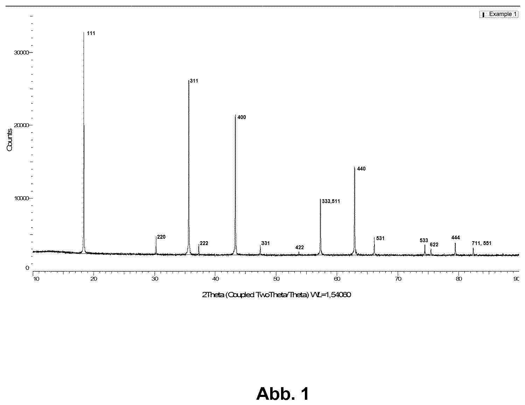

Abb. 1 zeigt das Röntgendiffraktogramm der Verbindung aus Beispiel 1. Dem Röntgendiffraktogramm ist zu entnehmen, dass phasenrein der Spinell mit eingebautem Niob entsteht.

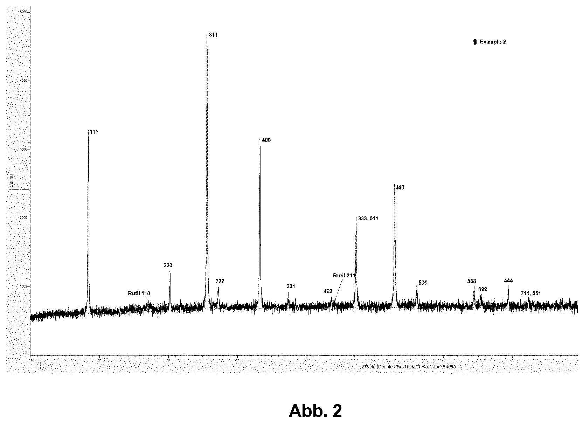

Abb. 2 zeigt das Röntgendiffraktogramm der Verbindung aus Beispiel 2. Dem Röntgendiffraktogramm ist zu entnehmen, dass zu dem Spinell noch ein kleiner Anteil einer Rutilphase entsteht.

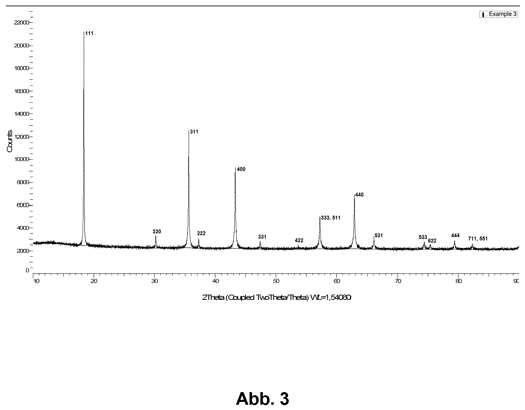

Abb. 3 zeigt das Röntgendiffraktogramm der Verbindung aus Beispiel 3. Dem Röntgendiffraktogramm ist zu entnehmen, dass phasenrein der Spinell mit eingebautem Nb und Ni entsteht.

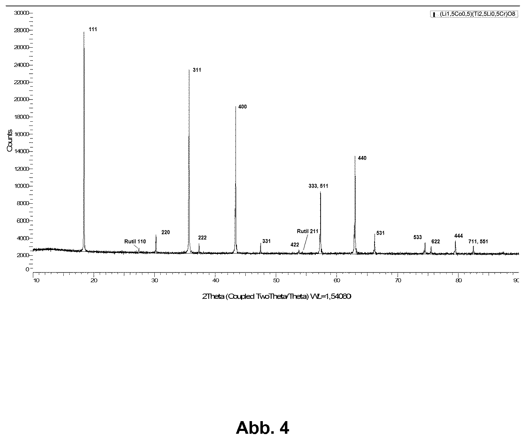

Abb. 4 zeigt das Röntgendiffraktogramm der Verbindung Li_{1,5}Co_{0,5}(Ti_{2,5}Li_{0,5}Cr)O₈. Dem Röntgendiffraktogramm ist zu entnehmen, dass zu dem Spinell noch ein kleiner Anteil einer Rutilphase entsteht.

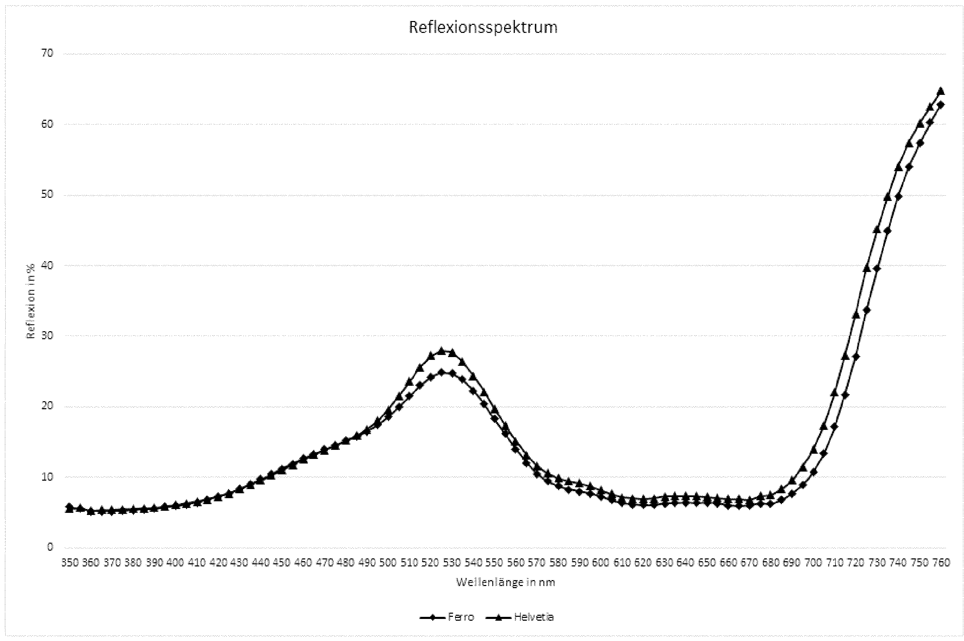

Abb. 5 zeigt ein Reflexionsspektrum des erfindungsgemäßen neuen Pigments und ein Reflexionsspektrum eines bekannten grünen Pigments entsprechend dem US-Patent 9,187,617B1 der Ferro Corporation

## Patentansprüche

1. Grünes Pigment, umfassend ein Material mit Spinellstruktur der allgemeinen Formel
(A₁₋ₓB₁₊ₓ)(C_{3-x-y}D₂ₓB_{1-x-2y}Ni_{3y})O₈,
mit 0,05 ≤ x ≤ 0,9 und 0,05 ≤ y ≤ 0,5, wobei x+2y ≤ 1 ist,
oder
(A₁₋ₓB₁₊ₓ)(C₃₋ₓD_{2x-y}B_{1-x-y}Ni_{2y})O₈,
mit 0,05 ≤ x ≤ 0,5 und 0,05 ≤ y ≤ 0,5,
oder
(A₁₋ₓB₁₊ₓ)(C_{3-x-4y}D₂ₓB_{1-x+y}Nb_{3y})O₈,
mit 0,05 ≤ x ≤ 0,5 und 0,05 ≤ y ≤ 0,2,
oder
(A₁₋ₓB₁₊ₓ)(C₃₋ₓD_{2x-2y}B_{1-x+y}Nb_{y})O₈,
mit 0,05 ≤ x ≤ 0,9 und 0,05 ≤ y ≤ 0,2, wobei x ≥ y ist,
oder
(A₁₋ₓB₁₊ₓ)(C_{3-x-3y}D₂ₓB₁₋ₓNb_{2y}Ni_{y})O₈,
mit 0,05 ≤ x ≤ 0,9 und 0,05 ≤ y ≤ 0,2,
wobei A mindestens ein Element aus der Gruppe Co, Zn, Ca, Mg, Cu ist; und
wobei B mindestens ein Element aus der Gruppe Li, Na ist; und
wobei C mindestens ein Element aus der Gruppe Ti, Mn, Sn, Ge ist; und
wobei D mindestens ein Element aus der Gruppe Cr, B, Fe, Mn, Al ist.

2. Grünes Pigment nach Anspruch 1, **dadurch gekennzeichnet, dass** es sich bei dem nickelhaltigen Mischoxid um (Co₁₋ₓLi₁₊ₓ)(Ti_{3-x-y}Cr₂ₓLi_{1-x-2y}Ni_{3y})O₈ oder (Co₁₋ₓLi₁₊ₓ)(Ti₃₋ₓCr_{2x-y}Li_{1-x-y}Ni_{2y})O₈ handelt.

3. Grünes Pigment nach Anspruch 1, **dadurch gekennzeichnet, dass** es sich bei dem niobhaltigen Mischoxid um (Co₁₋ₓLi₁₊ₓ)(Ti_{3-x-4y}Cr₂ₓLi_{1-x+y}Nb_{3y})O₈ oder (Co₁₋ₓLi₁₊ₓ)(Ti₃₋ₓCr_{2x-2y}Li_{1-x+y}Nb_{y})O₈ handelt.

4. Grünes Pigment nach Anspruch 1, **dadurch gekennzeichnet, dass** es sich bei dem nickel- und niobhaltigen Mischoxid um (Co₁₋ₓLi₁₊ₓ)(Ti_{3-x-3y}Cr₂ₓLi₁₋ₓNb_{2y}Ni_{y})O₈ handelt.

5. Grünes Pigment nach einem der vorherigen Ansprüche, **dadurch gekennzeichnet, dass** es eine Nickellässigkeit von weniger als 80 mg/kg und eine Kobaltlässigkeit von weniger als 30 mg/kg aufweist (gemäß DIN EN 71.3:2013-05).

6. Verfahren zur Herstellung eines grünen Pigments nach einem der vorherigen Ansprüche, umfassend die folgenden Schritte:
i) Mischen der Carbonate, Nitrate, Oxalate, Phosphate, Hydroxide, Fluoride, Borate oder entsprechender Metallorganischer Verbindungen der Metalle Co, Zn, Ca, Mg, Cu, Li, Na, Ti, Mn, Sn, Ge, Cr, B, Fe , Mn, Al, und Ni oder Nb oder Ni und Nb im Mischer
ii.) Glühen dieser Mischung bei einer Temperatur von 900°C bis 1400°C für 1h bis 3h.

7. Verfahren zur Herstellung eines grünen Pigments nach Anspruch 6, **dadurch gekennzeichnet, dass** das Produkt in einer Kugelmühle aufgemahlen wird.

8. Farbzusammensetzung, Kunststoff oder Beschichtung enthaltend das grüne Pigment nach einem der Ansprüche 1 bis 5.

## Claims

1. Green pigment, comprising a material with spinel structure of the general formula
(A₁₋ₓB₁₊ₓ)(C_{3-x-y}D₂ₓB_{1-x-2y}Ni_{3y})O₈,
with 0.05 ≤ x ≤ 0.9 and 0.05 ≤ y ≤ 0.5, whereby x+2y is ≤ 1,
or
(A₁₋ₓB₁₊ₓ)(C₃₋ₓD_{2x-y}B_{1-x-y}Ni_{2y})O₈,
with 0.05 ≤ x ≤ 0.5 and 0.05 ≤ y, ≤ 0.5,
or
(A₁₋ₓB₁₊ₓ)(C_{3-x-4y}D₂ₓB_{1-x+y}Nb_{3y})O₈,
with 0.05 ≤ x ≤ 0.5 and 0.05 ≤ y, ≤ 0.2,
or
(A₁₋ₓB₁₊ₓ)(C₃₋ₓD_{2x-2y}B_{1-x+y}Nb_{y})O₈,
with 0.05 ≤ x ≤ 0.9 and 0.05 ≤ y, ≤ 0.2 whereby x is ≥ y,
or
(A₁₋ₓB₁₊ₓ)(C_{3-x-3y}D₂ₓB₁₋ₓNb_{2y}Ni_{y})O₈,
with 0.05 ≤ x ≤ 0.9 and 0.05 ≤ y, ≤ 0.2,
whereby A is at least one element of the group Co, Zn, Ca, Mg, Cu, and
whereby B is at least one element of the group Li, Na, and
whereby C is at least one element of the group Ti, Mn, Sn, Ge, and
whereby D is at least one element of the group Cr, B, Fe, Mn, AI.

2. Green pigment, according to claim 1, **characterized in that** the nickelous mixed oxide concerns (Co₁₋ₓLi₁₊ₓ)(Ti_{3-x-y}Cr₂ₓLi_{1-x-2y}Ni_{3y})O₈ or (Co₁₋ₓLi₁₊ₓ)(Ti₃₋ₓCr_{2x-y}Li_{1-x-y}Ni_{2y})O₈.

3. Green pigment, according to claim 1, **characterized in that** the niobium mixed oxide concerns (Co₁₋ₓLi₁₊ₓ)(Ti_{3-x-4y}Cr₂ₓLi_{1-x+y}Nb_{3y})O₈ or (Co₁₋ₓLi₁₊ₓ)(Ti₃₋ₓCr_{2x-2y}Li_{1-x+y}Nb_{y})O₈.

4. Green pigment, according to claim 1, **characterized in that** the nickelous and the niobium mixed oxide concerns (Co₁₋ₓLi₁₊ₓ)(Ti_{3-x-3y}Cr₂ₓLi₁₋ₓNb_{2y}Ni_{y})O₈.

5. Green pigment according to one of the precedent claims, **characterized in that** it features a nickel release of less than 80 mg/kg and a cobalt release of less than 30mg/kg (according to DIN EN 71.3:2013-05).

6. Method for manufacturing a green pigment according to one of the precedent claims, comprising the following steps:
i) mixing the carbonates, nitrates, oxalates, phosphates, hydroxides, fluorides, borates or the according organometallic compounds of the metals Co, Zn, Ca, Mg, Cu, Li, Na, Ti, Mn, Sn, Ge, Cr, B, Fe, Mn, Al, and Ni or Nb or Ni and Nb in the mixer,
ii.) annealing of this mixture at a temperature of 900 °C to 1400 °C for 1 to 3 hours.

7. Method for manufacturing a green pigment according to claim 6, **characterized in that** the product is grinded in a ball mill.

8. Colour composition, plastic or coating, containing the green pigment, according to one of the claims 1 to 5.

## Revendications

1. Pigment vert contenir un matériel avec structure spinelle avec la formule générale :
(A₁₋ₓB₁₊ₓ)(C_{3-x-y}D₂ₓB_{1-x-2y}Ni_{3y})O₈,
avec 0.05 ≤ x ≤ 0.9 and 0.05 ≤ y ≤ 0.5, cependant x+2y est ≤ 1,
ou
(A₁₋ₓB₁₊ₓ)(C₃₋ₓD_{2x-y}B_{1-x-y}Ni_{2y})O₈,
avec 0.05 ≤ x ≤ 0.5 and 0.05 ≤ y, ≤ 0.5,
ou
(A₁₋ₓB₁₊ₓ)(C_{3-x-4y}D₂ₓB_{1-x+y}Nb_{3y})O₈,
avec 0.05 ≤ x ≤ 0.5 et 0.05 ≤ y, ≤ 0.2,
ou
(A₁₋ₓB₁₊ₓ)(C₃₋ₓD_{2x-2y}B_{1-x+y}Nb_{y})O₈,
avec 0.05 ≤ x ≤ 0.9 and 0.05 ≤ y, ≤ 0.2 cependant x est ≥ y,
ou
(A₁₋ₓB₁₊ₓ)(C_{3-x-3y}D₂ₓB₁₋ₓNb_{2y}Ni_{y})O₈,
avec 0.05 ≤ x ≤ 0.9 et 0.05 ≤ y, ≤ 0.2,
cependant A est au moins un élément de groupe Co, Zn, Ca, Mg, Cu, et
cependant B est au moins un élément de groupe Li, Na, et
cependant C est au moins un élément de groupe Ti, Mn, Sn, Ge, et
cependant D est au moins un élément de groupe Cr, B, Fe, Mn, Al.

2. Pigment vert, selon la revendication 1, **caractérisé en ce que** l'oxyde mixte nickélifère concerne (Co₁₋ₓLi₁₊ₓ)(Ti_{3-x-y}Cr₂ₓLi_{1-x-2y}Ni_{3y})O₈ ou (Co₁₋ₓLi₁₊ₓ)(Ti₃₋ₓCr_{2x-y}Li_{1-x-y}Ni_{2y})O₈.

3. Pigment vert, selon la revendication 1, **caractérisé en ce que** l'oxyde mixte au niobium concerne (Co₁₋ₓLi₁₊ₓ)(Ti_{3-x-4y}Cr₂ₓLi_{1-x+y}Nb_{3y})O₈ ou (Co₁₋ₓLi₁₊ₓ)(Ti₃₋ₓCr₂ₓ₋2_{y}Li_{1-x+y}Nb_{y})O₈.

4. Pigment vert, selon la revendication 1, **caractérisé en ce que** l'oxyde mixte nickélifère concerne (Co₁₋ₓLi₁₊ₓ)(Ti_{3-x-3y}Cr₂ₓLi₁₋ₓNb_{2y}Ni_{y})O₈.

5. Pigment vert, selon l'une des revendications précédentes, **caractérisé en ce que** le pigment comporte une nickel perméabilité moins que 80 milligrammes/kilo et une cobalt perméabilité moins que 30 milligrammes/kilo (selon DIN EN 71.3 :2013-05).

6. Procédé pour la fabrication d'un pigment vert, selon l'une de revendications précédentes, contenir les étapes suivantes :
i) Mélanger les carbonate, nitrate, oxalate, phosphate, hydroxyde, fluorure, borate, ou conformément des composés organométalliques des métaux Co, Zn, Ca, Mg, Cu, Li, Na, Ti, Mn, Sn, Ge, Cr, B, Fe, Mn, Al et Ni ou Nb ou Ni et Nb dans le mixer.
ii.) Rougeoyer ce mélange à une température de 900°C à 1400°C entre 1 et 3 heures.

7. Procédé pour la fabrication d'un pigment vert, selon la revendication 6, **caractérisé en ce que** le produit est moudre d'un broyeur à boulets.

8. Composition de couleurs, plastique ou revêtement contient le pigment vert, selon l'une de revendications 1 à 5.
